**Europäisches Patentamt**

**European Patent Office**

**Office européen des brevets**

(19)

(11) Numéro de publication: **0 022 036**
**A1**

(12) **DEMANDE DE BREVET EUROPEEN**

(21) Numéro de dépôt: **80401006.4**

(22) Date de dépôt: **02.07.80**

(51) Int. Cl.³: **G 02 B 5/16**
**G 02 B 5/172**

(30) Priorité: **02.07.79 FR 7917125**

(43) Date de publication de la demande:
**07.01.81 Bulletin 81/1**

(84) Etats Contractants Désignés:
**DE GB SE**

(71) Demandeur: **RADIALL Société anonyme dite:**
**101, rue Philibert Hoffmann**
**F-93116 Rosny sous Bois(FR)**

(72) Inventeur: **Cartier, Jacques**
**8, avenue Foch**
**F-94120 Fontenay-Sous-Bois(FR)**

(74) Mandataire: **Nony, Michel**
**29, rue Cambacérès**
**F-75008 Paris(FR)**

(54) **Perfectionnements aux câbles optiques.**

(57) L'invention concerne un câble optique, du type comportant un tube 1 à l'intérieur duquel est disposée une fibre optique 4 de diamètre inférieur aux dimensions intérieures du tube 1 et de longueur supérieure à la longueur du tube.

Ce câble comprend des moyens 5 pour positionner, au moins en certains points, la fibre optique 4 par rapport au tube 1.

Fig.1

**EP 0 022 036 A1**

## Perfectionnements aux câbles optiques

La présente invention concerne des perfectionnements aux câbles optiques et plus particulièrement aux câbles optiques du type comportant un tube à l'intérieur duquel est disposée une fibre optique de diamètre inférieur aux dimensions intérieures du tube et de longueur supérieure à la longueur du tube.

On connaît de tels câbles optiques dans lesquels une fibre optique est placée à l'intérieur d'un support mécanique qui peut, par exemple, être constitué d'un tube intérieur entouré d'une tresse de renfort réalisée en métal ou dans une matière synthétique telle que du Kevlar et d'une gaine extérieure.

La fibre optique, de diamètre inférieur au diamètre intérieur du tube intérieur, est prévue en surlongueur pour éviter de lui appliquer des contraintes mécaniques lors d'une traction sur le câble ou lors d'une variation de température. A l'origine, la fibre est posée libre dans le tube intérieur.

Cependant, aux extrémités du câble, la fibre a tendance à reprendre sa position droite sur une certaine longueur, de sorte que le câble optique ainsi réalisé n'est plus homogène.

Par ailleurs, on prévoit à ces extrémités des connecteurs pour immobiliser la fibre par rapport au support mécanique du câble constitué par le tube intérieur, la tresse et la gaine extérieure. L'effort applicable à la fibre dans le connecteur étant faible, il faut éviter qu'une contrainte sur le câble se reporte sur la fibre au niveau du connecteur.

La présente invention vise à fournir un câble optique perfectionné qui conserve son homogénéité sur toute sa longueur, y compris à ses extrémités, et qui évite de plus de faire

0022036

-2-

subir des contraintes à la fibre optique dans le câble et également dans les zones des connecteurs.

A cet effet, le câble optique selon l'invention, du type rappelé ci-dessus, est caractérisé par le fait qu'il comprend des moyens pour positionner au moins en certains points la fibre optique par rapport au tube.

On peut ainsi éviter que les extrémités de la fibre optique ne reprennent leur position droite. De plus, le câble conserve son homogénéité et les contraintes qui sont exercées sur le câble et au niveau des connecteurs ne sont pas reportées sur la fibre optique.

Dans une première forme de réalisation, les moyens pour positionner la fibre optique par rapport au tube comportent des entretoises disposées à intervalles sensiblement réguliers, ces entretoises étant agencées pour assurer l'immobilisation longitudinale de la fibre optique par rapport au tube.

A l'état de repos et à température ambiante, la longueur de la fibre optique est supérieure à la longueur du câble. Ainsi, lorsqu'une traction est exercée sur le câble optique, le support mécanique s'allonge et chaque tronçon de fibre optique compris entre deux entretoises se rapproche de sa position droite.

Ces entretoises peuvent par exemple être constituées d'organes annulaires dont le diamètre extérieur correspond sensiblement au diamètre intérieur du tube, la fibre optique étant engagée dans l'ouverture de ces organes.

En variante, les entretoises sont réalisées par une déformation du tube qui serre la fibre optique.

Selon une seconde forme de réalisation de l'invention, les moyens pour positionner la fibre optique par rapport au tube comportent au moins un canal de guidage de section allongée placé à l'intérieur du tube et dans lequel est disposée la fibre optique.

A l'état de repos, la fibre optique forme, dans le canal de guidage, des ondulations dont la forme dépend de celle du canal. Lorsque le tube intérieur augmente de longueur, la fibre se rapproche du centre de ce tube mais en restant guidée. Quant au contraire la longueur du tube diminue, la fibre reprend sa forme ondulée en se déplaçant dans le canal de guidage.

Dans un autre mode de réalisation, le canal de guidage forme une rampe hélicoïdale et la fibre optique est alors disposée en hélice à l'intérieur du canal.

Cependant, lorsque la fibre est ainsi disposée, elle a une torsion de 360° par pas d'hélice ce qui, dans certains cas, peut présenter des inconvénients.

Selon un autre mode de réalisation qui permet d'éviter cet inconvénient éventuel, le canal de guidage est plan et la fibre optique y est alors disposée en ondulations qui peuvent, par exemple, être sensiblement sinusoïdales.

Le canal de guidage est par exemple formé dans un jonc ouvert, sensiblement en forme C, ou dans un jonc tubulaire. Une pluralité de canaux de guidage hélicoïdaux peuvent être formés dans le jonc.

D'autres caractéristiques et avantages de l'invention apparaîtront dans la description qui suit de certaines de ses formes de réalisation, données à titre d'exemples non limitatifs.

-4-

Aux dessins schématiques annexés :

- la figure 1 est une vue en coupe d'une première forme de réalisation de l'invention,

- la figure 2 est une vue agrandie d'une partie de la figure 1,

- la figure 3 est une vue similaire à la figure 2 représentant une variante de réalisation,

- la figure 4 est une vue en perspective partiellement en coupe d'une seconde forme de réalisation de l'invention,

- la figure 5 est une vue en coupe d'une variante de réalisation du câble optique représenté à la figure 4,

- les figures 6 et 7 sont des variantes de la figure 5.

- la figure 8 représente une variante du mode de réalisation représenté à la figure 5 et,

- la figure 9 représente une variante du mode de réalisation représenté à la figure 6.

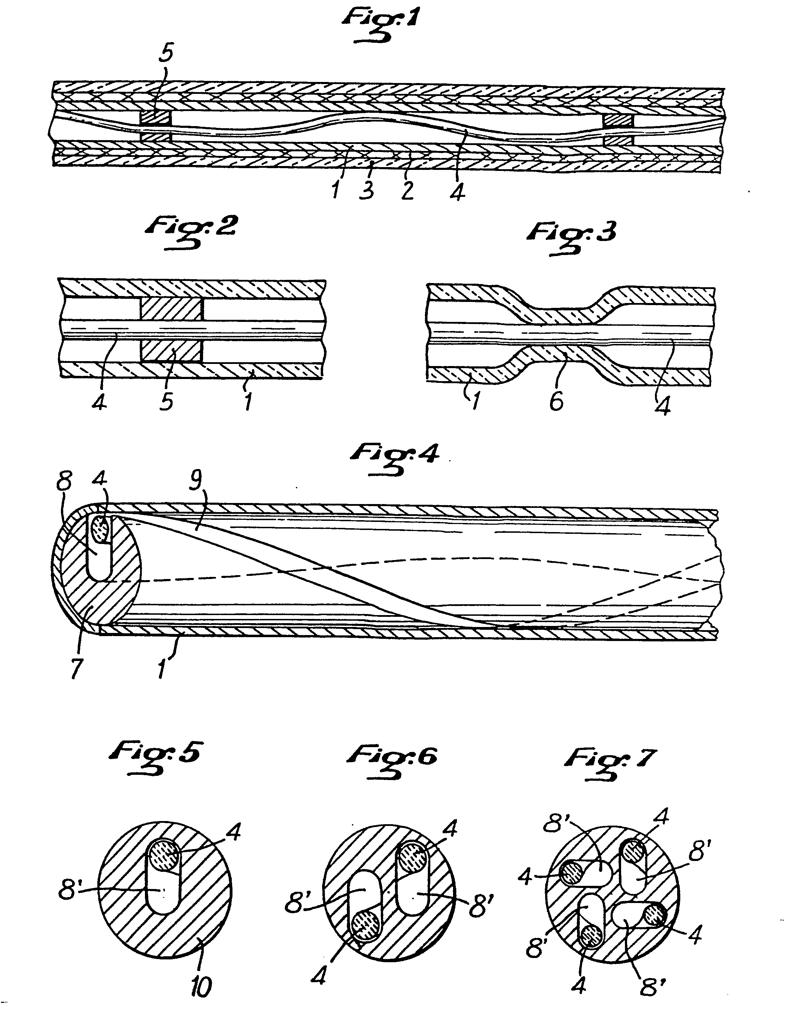

Les figures 1 et 2 montrent une première forme de réalisation du câble optique selon l'invention. Ce câble comporte d'une part un support mécanique formé d'un tube intérieur 1, d'une tresse de renfort 2 et d'une gaine extérieure 3. A l'intérieur du tube 1 est disposée en surlongueur une fibre optique 4.

A intervalles sensiblement réguliers, la fibre optique 4 est maintenue au moyen d'entretoises 5. Comme on le voit mieux dans la figure 2, ces entretoises 5 sont constituées d'organes annulaires dont le diamètre extérieur correspond sensiblement au diamètre intérieur du tube 1 et dont l'ouverture permet le passage de la fibre optique 4. Les moyens d'immobilisation des organes annulaires sur le tube 1 et les moyens d'immobilisation de la fibre dans ces organes annulaires sont tels que la fibre optique 4 est immobilisée longitudinalement par rapport au tube 1 au niveau de l'entretoise.

A titre d'exemple, dans le cas d'un câble optique dont la fibre a un diamètre compris entre 200 et 400 microns et dont le tube intérieur a un diamètre compris entre 1,5 et trois' fois le diamètre de la fibre, on pourra prévoir de disposer une entretoise 5 tous les 0,5 à 2 mètres.

La figure 3 représente une variante de l'entretoise représentée à la figure 2 dans laquelle elle est réalisée au moyen d'une déformation 6 du tube intérieur 1 qui est pincé pour venir serrer la fibre optique. De la même façon que dans les figures 1 et 2, le câble optique peut comporter autour du tube 1 une tresse 2 et une gaine extérieure 3 non représentées.

On a représenté à la figure 4 un deuxième mode de réalisation du câble optique selon l'invention en supprimant toutefois pour plus de clarté la tresse 2 et la gaine extérieure 3.

Dans cette forme de réalisation un jonc 7 réalisé dans une matière synthétique est disposé à l'intérieur du tube 1. Ce jonc 7, réalisé par exemple par extrusion, comporte un canal de guidage 8 de section allongée dans lequel est disposée la fibre optique 4.

Comme cela est clairement visible à la figure 4, le canal de guidage 8 a une forme hélicoïdale puisque l'une de ses extrémités correspond sensiblement à l'axe du jonc 7, tandis que son ouverture 9 décrit une hélice à la surface du jonc 7. Dans ce mode de réalisation, le jonc 7 est ouvert et présente sensiblement la forme d'un C.

La fibre optique 4 placée à l'intérieur du canal de guidage 8 est représentée ici dans la position qu'elle occupe lorsqu'aucune traction n'est exercée sur le câble optique. Dans ces conditions, elle se trouve à l'extérieur de la rampe hélicoïdale formée par ce canal de guidage et sa surlongueur est maximale.

Si une traction est exercée sur le câble optique, celui-ci s'allonge et la fibre optique 4 se rapproche du centre du jonc jusqu'à occuper une position sensiblement axiale dans laquelle elle commencera à reprendre une partie de l'effort de traction.

Si l'effort de traction est relâché, la fibre optique 4 se redéplace vers l'extérieur de la rampe hélicoïdale formée par le canal de guidage 8 jusqu'à reprendre la position dans laquelle elle est représentée à la figure 4.

La figure 5 représente une variante de l'agencement de la figure 4 dans laquelle le jonc 7 est remplacé par un jonc massif 10 de forme tubulaire comportant un canal de guidage 8' dans lequel est également placée la fibre optique 4. Le jonc 10, du fait de sa forme tubulaire, permet de résister particulièrement bien à l'écrasement.

De même que dans la figure 4, le canal de guidage 8' est également disposé en hélice.

Les figures 6 et 7 représentent des variantes de l'agencement représenté à la figure 5 dans lesquelles on a prévu respectivement deux et quatre canaux de guidage 8'. Ces canaux de guidage 8', qui contiennent chacun une fibre optique 4, sont également enroulés en hélice de façon que lorsqu'une traction est exercée sur le câble optique les fibres optiques 4 puissent se rapprocher de l'axe du câble.

Le déplacement des fibres optiques 4 dans les formes de réalisation représentées dans les figures 5, 6 et 7, est identique à ce qui a été décrit ci-dessus en référence à la figure 4.

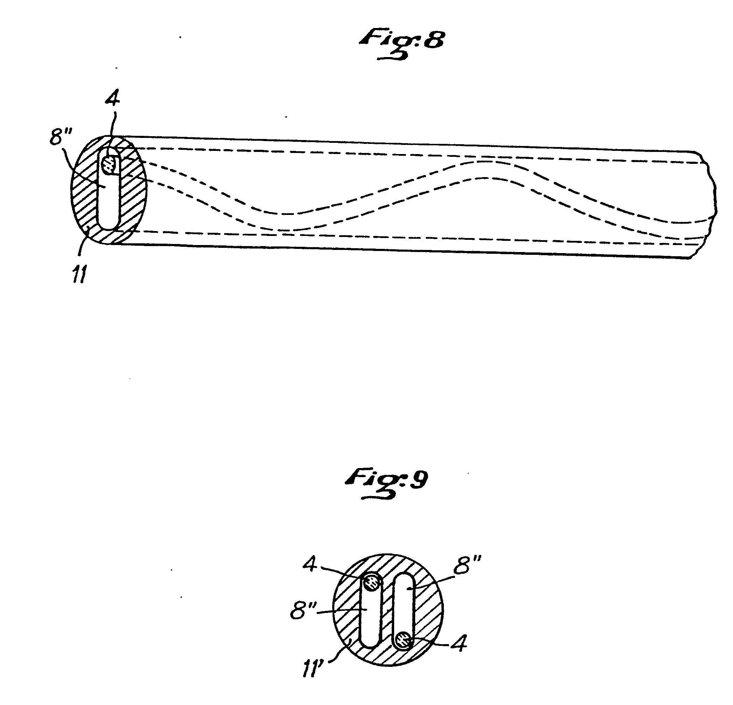

Dans la figure 8, on a représenté un autre mode de réalisation dans lequel est également prévu un jonc massif 11 comportant un canal de guidage 8" dans lequel est disposée la fibre optique 4.

Toutefois, le canal de guidage 8", tout en ayant une section allongée, a une forme sensiblement plane. Il s'étend ici diamètralement afin de pouvoir donner à la fibre optique 4, qui est disposée dans le canal 8" par exemple en ondulations sinusoïdales, une amplitude maximale.

Comme dans les modes de réalisation précédents, lorsqu'une traction est exercée sur le jonc 11, la fibre optique 4 tend à prendre une position droite et elle tend à reprendre sa position sinusoïdale lorsque la traction cesse d'être exercée.

Dans la figure 9, le jonc 11' comporte deux canaux de guidage 8" sensiblement plans et parallèles. Ces canaux sont alors le moins décalés possible par rapport à l'axe du jonc 11' afin de pouvoir donner là-aussi une amplitude maximale aux fibres optiques 4 qui sont disposées sinusoïdalement dans les canaux de guidage plans 8".

On peut également prévoir dans les formes de réalisation des figures 4 à 9, de fixer la fibre optique au jonc à des intervalles réguliers pour la solidariser en ces points des joncs 7, 10, 11, 11' et du tube intérieur 1 comme cela est réalisé dans les formes de réalisation représentées aux figures 1 à 3.

-8-

On comprend par conséquent que l'invention permet de réaliser un câble optique dans lequel la fibre optique est disposée à l'intérieur d'un tube en surlongueur afin d'éviter que des contraintes de traction ne soient exercées sur cette fibre tout en assurant l'homogénéité du câble.

Revendications de brevet

1. Câble optique, du type comportant un tube à l'intérieur duquel est disposée une fibre optique de diamètre inférieur aux dimensions intérieures du tube et de longueur supérieure à la longueur du tube, caractérisé par le fait qu'il comprend des moyens pour positionner, au moins en certains points, la fibre optique par rapport au tube.

2. Câble optique selon la revendication 1, caractérisé par le fait que lesdits moyens comportent des entretoises disposées à intervalles sensiblement réguliers, ces entretoises étant agencées pour assurer l'immobilisation longitudinale de la fibre optique par rapport au tube.

3. Câble optique selon la revendication 2, caractérisé par le fait que lesdites entretoises sont constituées d'organes annulaires dont le diamètre extérieur correspond sensiblement au diamètre intérieur du tube, la fibre optique étant engagée dans l'ouverture de ces organes.

4. Câble optique selon la revendication 2, caractérisé par le fait que lesdites entretoises sont réalisées par une déformation du tube qui serre la fibre optique.

5. Câble optique selon la revendication 1, caractérisé par le fait que lesdits moyens comportent au moins un canal de guidage de section allongée, placé à l'intérieur du tube et dans lequel est disposée la fibre optique.

6. Câble optique selon la revendication 5, caractérisé par le fait que le canal de guidage forme une rampe hélicoïdale.

7. Câble optique selon la revendication 5, caractérisé par le fait que le canal de guidage est plan.

8. Câble optique selon l'une quelconque des revendications 5 à 7, caractérisé par le fait que le canal de guidage est formé dans un jonc ouvert sensiblement en forme de C.

9. Câble optique selon l'une quelconque des revendications 5 à 7, caractérisé par le fait que le canal de guidage est formé dans un jonc tubulaire.

10. Câble optique selon l'une quelconque des revendications 8 et 9, caractérisé par le fait qu'une pluralité de canaux de guidage sont formés dans le jonc.

Fig.1

5

1 3 2 4

Fig.2

4 5 1

Fig.3

1 6 4

Fig.4

8 4 9

7 1

Fig.5

4

8'

10

Fig.6

4

8' 8'

4

Fig.7

8' 4

4 8'

8' 4

4 8'

*Fig:8*

4

8"

11

*Fig:9*

4        8"

8"

11'       4

0022036

Office européen des brevets

**RAPPORT DE RECHERCHE EUROPEENNE**

Numéro de la demande

EP 80 40 1006

| Catégorie | Citation du document avec indication, en cas de besoin, des parties pertinentes | Revendication concernée |
|---|---|---|
| | DE - B - 2 445 532 (A.E.G.)<br>* Revendications 1,6-8,10,11; figures * | 1,3 |
| | -- | |
| | DE - A - 2 609 693 (SIEMENS)<br>* Revendication 1; figures 1,2 * | 1,2 |
| | -- | |
| | DE - A - 2 709 106 (SIEMENS)<br>* Page 8, lignes 2-11 * | 1,2 |
| | -- | |
| | DE - A - 2 519 680 (SIEMENS)<br>* Page 3, lignes 12-26; figure 1 * | 3 |
| | -- | |
| | GB - A - 1 470 890 (POST OFFICE)<br>* Revendications 1,4,6; figures * | 5,6,10 |
| | -- | |
| | FR - A - 2 393 503 (CABLES LYON)<br>* Revendications; figures * | 9,10 |
| | -- | |
| A | FR - A - 2 404 236 (K.M.G.)<br>* Page 4, lignes 1-39; figures * | 1 |
| | -- | |
| A | DE - A - 2 434 280 (LICENTIA)<br>* Page 10, lignes 2-6; revendications; figures * | 1 |
| | -- ./. | |

**DOCUMENTS CONSIDERES COMME PERTINENTS**

CLASSEMENT DE LA DEMANDE (Int. Cl. 3)

G 02 B 5/16
5/172

DOMAINES TECHNIQUES RECHERCHES (Int. Cl. 3)

G 02 B 5/14
5/16
5/172

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-10-1980 | PFAHLER |

OEB Form 1503.1  06.78

Office européen
des brevets

**RAPPORT DE RECHERCHE EUROPEENNE**

Numéro de la demande
EP 80 40 1006

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | <u>DE - A - 2 459 997</u> (SIEMENS)<br>* Revendications; figures *<br><br>---- | 1 | |
| | | | **DOMAINES TECHNIQUES RECHERCHES (Int. Cl. 3)** |